# EUROPEAN PATENT APPLICATION

(11) **EP 3 671 501 A1**
(43) Date of publication of application: **24.06.2020**
(21) Application number: 18464006.8
(22) Date of filing: 20.12.2018
(51) Int. Cl.: G06F 21/32, G06F 21/36, H04L 29/06, H04W 12/00, H04W 12/06

(54) **CONSTRUCTIVE ASSEMBLY AND METHOD FOR GRANTING AUTHORIZED ACCES TO AN INTERNET SERVICE PLATFORM**

(71) Applicant: SC Online Services Srl, Buzau (RO)
(72) Inventor: Lupu, Viorel, Buzau (RO)
(74) Representative: Apostol, Salomia

(57) **Abstract**

The present invention relates to a constructive assembly and a method for granting authorized access to an Internet service platform that ensures the protection of personal data and databases remotely exploited.

A user (U) initiates (1) procedure to request access to the Internet service platform (Service) by manipulating the Internet terminal (Di). The internet terminal (Di) must determine the user's unique identifier electronically for requesting authorization from the service platform (Service).

User identification it is possible by using alternative methods, in the next step the internet terminal (Di) sends (2) by Internet a request message to the server that authorizes (Da) containing the user ID.

In the next step when the user (U) is recognized, the server that authorizes (Da) automatically generates a random set of pointers designating sounds and images, set of pointers that are transmitted simultaneously (3, 3a) to the internet terminal (Di) and to the communication device (Dc).

In the next step the Internet terminal (Di) based on the received set of pointers (3a) prepares to display a set of images and the communication device (Dc) based on the received set of pointers (3) initiates a voice phone call (4) to the user's phone (M). The telephone system (GSM) informs (5) through the communication device (Dc) about the status and the events of the phone call the server that authorize (Da).

In the next step, the user (U) due to the fact that he answered the phone call and he is in front of the internet terminal (Di) that now displays the prepared set of images, he can act (7) following the instructions dictated by telephone (M) on the displayed images to be authenticated in real time.

## Description

The present invention relates to a constructive assembly and a method for granting authorized access to an Internet service platform that ensures the protection of personal data and databases remotely exploited.

From the present state of technics there were identified some solutions close to this such as:
US 6078908 Method for authorizing in data transmission systems
US patent 6078908 describes an assembly and a process focused on word processing, particularly transaction numbers that the user reads and types in their interaction with the computer terminal. There are no references temporal validity of the messages. There are identified the following disadvantages:
   - The procedure is initiated by the user by operating the terminal keyboard
   - The system cannot be operated by people with disabilities without additional human help
   - Messages can be relayed electronically (automatically by means of programs) in a time window uncontrollable by the system so that makes it possible to exploit the system by another person remote. The security risk is low, but the guarantee of user presence in front of the terminal cannot be ensured.
US 20070107050A1 Simple two-factor authentication
The US 20070107050A1 patent describes a procedure performed by processing the text alphanumeric codes, codes that the user reads from the display device WAP/WML and introduces them to the computer using the keyboard. There are no references temporal validity of the messages. There are identified the following disadvantages:
   - The procedure is initiated by the user by operating the terminal keyboard
   - The system cannot be operated by people with disabilities without additional human help
   - Messages can be relayed electronically (automatically by means of programs) in a time window uncontrollable by the system so that makes it possible to exploit the system by another person remote. The security risk is low, but the guarantee of user presence in front of the terminal cannot be ensured.
US 8917826B2 Detecting man-in-the-middle attacks in electronic transactions using prompts
US Patent 8917826B2 describes a system and method for removing security risk "man in the middle". According to the patent, the system contains an interactive voice response phone subsystem (IVR). The user initiates the procedure at the terminal and then validates the access code with the IVR system via phone keys. There are identified the following disadvantages:
   - The procedure is performed by the user via the terminal keypad and phone keypad
   - The system cannot be operated by people with disabilities without additional human help
   - The resulting system it is complex using IVR telephone services.
   - At least one possible scenario in which the person that interacts with the phone system is not in front of the computer that displays the access code

The technical problem solved by the invention is to provide an architecture constructive allowing authorized access of people with disabilities such as reduced memory capacity, physical disabilities - namely the inability to use keyboards, visually impaired, shortcomings coordination etc.

The method is based on the initiation of proceedings by the user through a terminal using automatic recognition technology of the user and does not require special skills of the user. The Internet terminal may use biometric recognition technologies (fingerprint, iris, facial fingerprint, voice recognition) or proximity card technologies (NFC, RFID proximity cards or similar devices: rings, bracelets, watches, etc.) for automatically transmitting the user identity.

The Internet terminal which initiated the procedure transmits the request to the services system that uses telephone services immediately indicating actions to be performed by the user during the call to the terminal. During the procedure the Internet terminal it is in sync with the services system. The proposed method and architecture design enables implementation in systems with low computing power, equipment compatible with the class of Internet of Things (loT). The whole proposed constructive architecture (the terminal, services system and the telecommunication equipment) can be implemented in a single device.

Constructive assembly and method for granting authorized access to an Internet service platform overcomes the disadvantages mentioned above in that the access of the user to the internet terminal (Di) it is initiated automatically by recognizing the user ID by the terminal using advanced technologies in this respect, in order to exploit the Internet services of a platform (SERVICE). Internet service platform comprises an authorization server (Da) that receives all access requests and permits access by the terminal internet (Di) after a validation of the user with a voice call using a communication device (DC) connected to the authorization server (Da) by private network of the platform (SERVICE) and to the telephone service (GSM). The authorization server (Da) sends voice instructions for some actions through the communication device (Dc) and telephone monitor (M) to the user (U) to be performed during the phone call at the Internet terminal (Di). if user actions are in accordance with the instructions designated then access is authorized, otherwise in all other cases access is denied.

Users (U) of Internet services platform (SERVICE) and the telephone service may be normal or people with physical disabilities or reduced ability to view or reduced memory capacity, seeking secure and fast authorized access to the service platform (SERVICE). Platform saves at the subscription moment in the authorization server (Da) telephone numbers and other personal data of the users.

The internet terminal (Di) to exploit web services platform (SERVICE), he shall act as the initiator of the request for access authorization and provide recognition of user identity using subsystems for automatically reading proximity cards, QR codes, biometric recognition (voice, face, iris, fingertip).

Internet authorization server (Da), component of services platform (SERVICE), receives requests for authorization and access and has access in the protected private network to databases and communication devices (Dc).

Communication device (Dc), component of the services platform (SERVICE) is connected to the protected private network and to the telephone service (GSM) and implements the voice modem technology.

Voice telephony terminal with monitor function (M) is connected and accessible through the telephone system (GSM) and can provide additional protection systems such as those implemented in systems like Android, Windows or iOS such as NFC card reader, biometric authentication, password, pin or gestures etc... Constructive assembly and method for granting authorized access to an Internet service platform is open for increased user comfort especially for disabled by using terminals that allow access to internet services by voice commands or gestures. Constructive assembly and method for granting authorized access to an Internet service platform is more secure and immune to mistakes caused by voice commands erroneous or gestures misinterpreted because the telephone call validation may be rejected so the authorization process is cancelled.

The entire constructive ensemble can be implemented in a single device, respectively terminal (Di), authorization server (Dc) and telecommunications equipment (Dc) can be implemented in a single unit for specialized local services with same two-factor authentication.

As the duration of a call is minimized without the need of IVR interaction, the use of telephone lines decreases so reducing the costs and the number of telephone lines required for implementation of the constructive assembly and method for granting authorized access to an Internet service platform.

The technologies for recognition of users may be based on biometric technologies such as fingerprint, facial, iris, voice or based on indirect recognition of users such as proximity card reader (NFC, RFID or similar devices: rings, bracelets, watches).

Method that consists in that the user initiates the authorization request by manipulating the Internet terminal that request authorization (Di), so the internet terminal determine the unique electronic identifier of the user.

The identification of the user (U) it is possible by using an alternative method. In the next phase the internet terminal (Di) transmits over the Internet a message to the server that authorizes (Da) which contains the user ID in the local database, in another step the user ID is recognized and the server that authorizes (Da) automatically generates a random set of pointers designating sounds and images, pointers that are simultaneously sent to the Internet terminal (Di) and to the communication device (Dc).

In another phase the communication device (Dc) initiates a telephone call to the monitor (M) of the user (U). Telephone network (GSM) informs the communication device (Dc) about the status of the call. In the same phase the internet terminal (Di) prepares a set of images to be displayed based on the received pointers. In another phase, due to the fact that the user (U) answered the voice call, prepared images are displayed on the terminal and the indicated sounds are played back by the monitor (M) from the communication device (Dc). In this phase, the user (U) acts in real time on the images based on the voice instructions played back by the telephone (M).

The server that authorize (Da) it is informed by the telephone network (GSM) through the communication device (Dc) about status of the call. If the call fails, the server that authorizes (Da) closes the procedure by refusing authorization and then informs the device that initiated the request (Di) about the rejected request. If the user (U) answers the call, the event is taken from the telephone network (GSM) through the communications device (Dc) by the server that authorize (Da). Server that authorize (Da) informs the device that initiated the authentication request namely the Internet terminal (Di) to display the prepared set of images and the communication device (Dc) to start playback of the prepared set of sounds.

In case the user does not have the telephone phone number registered in the database, of the services platform (SERVICE), the call will meet someone who will not be in front of the displayed images or voice instructions are useless. In this case the call will be closed and will result in the rejection of approval.

The user actions determined by the telephone voice call in progress are valued by generating a new set of pointers. If this set of pointers generated by user actions is identical to the set on which were generated images, authorization request is relayed and server allows the access, in all other circumstances the requested authorization is rejected.

Proposed method for granting authorized access to the services platform by persons with disabilities it is beneficial, because the interaction with the telephone system is limited to answering the call and the indicated actions to be executed may be simple and ordered touches of the images. Even answering the call can be subject of automatization and by using wearable devices becomes friendlier for people with disabilities.

The method is directly exploitable and in extreme situations such as loss of the ID card or impossible to read the user's unique identifier for different reasons. In these situations it is necessary to use the username and password for specific Internet service. The password can be communicated only in special situations and can be single use or temporary password for verifying the identity of the applicant in fact at every release.

The invention offers the following advantages:
1. Method for granting access by two-factor authentication that requests low interactions with the user and minimum skills for the user, usable by people with disabilities or in environments where skills are reduced.
2. A method for granting access to Internet services validating the presence of the user in front of the Internet terminal by a telephone call. User must follow instructions dictated by the phone system and should be performed by the user at the Internet terminal during phone call.
3. Efficient use of computing power so it can be implemented in systems with computing power reduced such as the category Internet of Things (loT). In these implementations the terminal with recognition capabilities (e.g. identification card), system services and telephone communication module (GSM) can be integrated into a single device.
4. The method by which alphanumeric messages are removed in favor of images and sounds whose meaning can be known by small groups of people so that safe operation can be increased without technological contribution.
5. The method by which in the authentication process can be used sounds whose meaning is known by the group of authentic users. For example language or meaning of actions. Safe operation of the system can be increased without technological contribution.
6. The method by which to the unauthorized users are not disclosed further clues on possible ways to bypass the authentication system. For example images are not displayed before the phone call answer. Authorized users know this detail and by rejecting unsolicited phone call automatically determines the closure procedure, rejecting unauthorized access request.
7. The method by which the risk of unauthorized access to Internet services is low in the event of theft of the authentication technical elements (ID card and GSM phone simultaneously) through that emphasis is placed on the significance of images and sounds that can be known only by the genuine users group.

In the following is described an embodiment of the invention in connection with figures 1-5, which are:
- Fig. 1-Constructive assembly
- Fig. 2- Diagram of the method
- Fig. 3 - Phase I of the method: Internet terminal display - snapshot - 1
- Fig. 4 - Phase II of the method: Internet terminal display - snapshot - 2
- Fig. 5 - Phase III of the method: Internet terminal display - snapshot - 3

The invention as proposed includes Internet services, databases and mobile voice telecommunications services in order to simplify the effort of validation of users in real-time including users with certain disabilities.

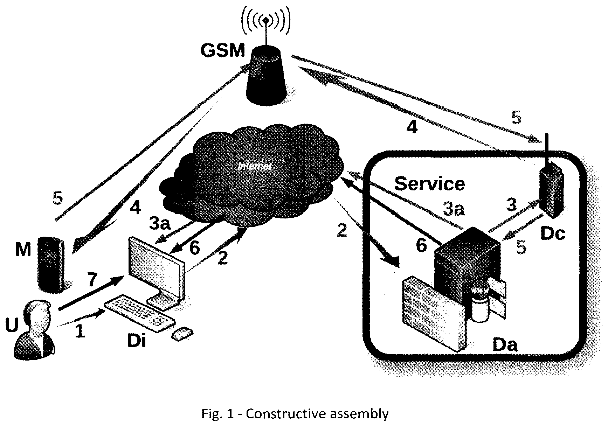

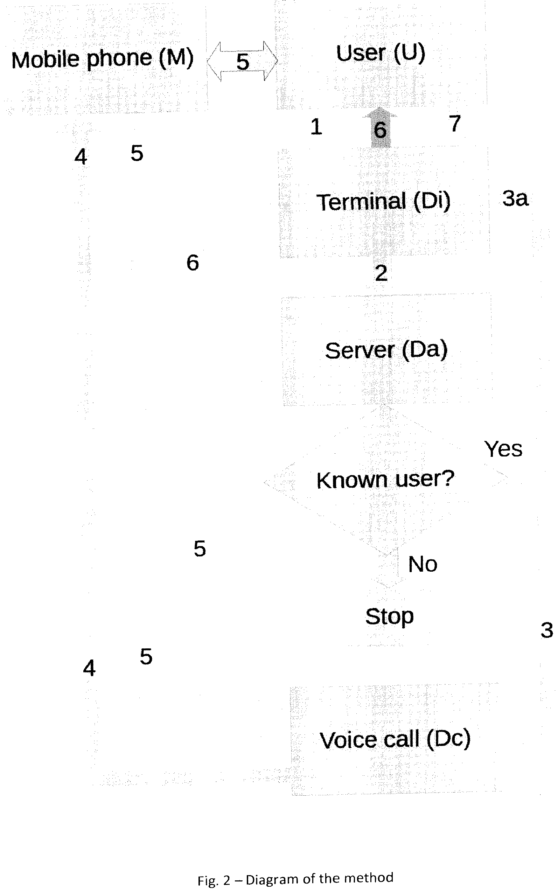

Description of figure 1: Constructive assembly and of figure 2: Diagram of the method.

U - User of the Internet service platform (Service) and telephone service subscriber (GSM or landline). The user may be a person with disabilities (e.g. reduced ability to view, elder people, etc...) or a normal one in a stressful environment. The user may equally be a normal person who wants quick and secure access without memorizing long and complex passwords, which are changed relatively often as recommended by current IT security practices. The user has pre-registered in the system (Service) personal data and telephone number since the subscription date. On the occasion of subscribing to the service, the user may receive and access card, for example a NFC Id card.

M - Voice telephony terminal (phone) with monitor function. The phone is connected and accessible through a telephone system (landline or GSM or other systems: e.g. Internet phone). The phone (M) may provide additional protection systems such as those implemented in Android, Windows or iOS (biometric authentication, password, pin, gestures, etc...) and an automatic response function for comfort of the user.

Di - Internet terminal (computer, tablet, smart phone, e-reader, etc.) that can exploit Internet services platform (Service). The Internet terminal it is also the originator of the request for authorization access. The Internet terminal (Di) may provide additional protection systems for user access (U) such as those implemented in Android, Windows or iOS (biometric authentication, password, pin, and gestures). The Internet terminal (Di) may have card reader, image recognition system for QR codes, voice recognition, etc...

Da - Authorization server for the Internet services platform (Service) to which all requests for authorization of access are transmitted. Authorization server it is connected in the private network of the services platform (Service) to have protected access at database services, communication devices etc. The private network of the services platform it is protected by security servers called firewalls.

Dc - Telephone communication device connected to the private network of the service platform (Service) and to a telephone service (GSM phone or landline network). The telephone communication (Dc) device implements voice modem technology.

Figure 1: Numbered arrows represent the interactions between system components such as events in order of appearance:
The user (U) initiates (1) the procedure to request authorization by manipulating Internet terminal device (Di) which requesting authorization. The internet terminal device (Di) have to determine the user's unique identifier electronically. Identification may be achieved through alternative methods such as recognition of fingerprint, face, iris or voice, etc. or by automatically reading a device (NFC ID card, RFID, and QR) capable of communicating electronic user identifier (U). In exceptional circumstances, the user can initiate the process by typing a user name and password.

Internet terminal device (Di) requests authorization (2) by sending a message that contains the user ID to the server that authorizes (Da). The transmission is achieved by communication channel (Internet) on which will take place later operation of services requested by the user (U).

The server that authorizes (Da) verifies the user ID in the database (local). For an unknown identifier, server that authorizes transmits to the Internet terminal device (Di) refusal of authorization and the procedure ends. If the user ID is known, authorizing server (Da) automatically and randomly generates a set of pointers designating sounds and images. The set of pointers is transmitted (3, 3a) simultaneously to the internet terminal device (Di) which initiated the request for authorization and to the communication device (Dc) which liaises with the user through the monitor device (M) (mobile).

The communication device (Dc) receives (3) the set of pointers and initiates (4) a voice call (GSM) to the phone number of the user (U). Monitor device (M) and the telecommunications system (GSM) informs (5) through the communication device (Dc) the authorization server (Da) about voice call status. The communication device (Dc) detects call events such as busy, call rejected, answer, no answer, etc....

The Internet terminal device (Di) who initiated the request for authorization receives (3a) the set of pointers and prepares a corresponding set of images to be displayed. This set of images containing the images designated by the pointers and some chosen randomly. The portfolio of images which form the basis of choosing of the internet terminal device (Di) can be stored locally or dynamically received from the services platform (Service).

The server that authorizes (Da) it is informed (5) by the GSM communications device (Dc) about call status. If the call fails (congested network, no signal, rejected call etc.), the server that authorizes (Da) closes the procedure by refusing authorization and then informs the internet terminal device (Di) about refusal. In case that the user (U) answers the call through the monitor (M) event is detected (5) by the communications device (Dc) respectively by the server that authorizes (Da). The server that authorizes (Da) informs (6) the device that initiated the request (Di) to display the prepared image set. In this phase the communication device (Dc) starts voice playback.

The user (U) due to the fact that he answered the voice call (5) now he can sees images displayed by the Internet terminal (Di) and he must act (7) based on instructions played back by the monitor (M) over the images displayed on the Internet terminal (Di) to be logged on. In case the user (U) does not have the phone number registered in the database of the service platform, the call will reach someone who will not be in front of images so voice instructions are useless, the call will be closed and will result in the rejection of the authorization approval. Without voice instructions the user does not know how to progress in the authorization procedure. Trying to select some images has a huge probability to produce mistakes that will result in the rejection of the authorization approval. The opportunity to try it is limited only in the short timeframe of the answered phone call.

The user actions (U) in the ongoing voice call are evaluated and are generating a new set of pointers that corresponds to user actions. If the new set of pointers generated by user actions is identical to the set on which displayed images were generated, authorization request is relayed to the server that authorize (Da) and the access it is potentially granted. In all other cases the authorization request is rejected.

The server that authorize (Da) verifies if the user's actions (U) held during the phone call. If the phone call was carried out normally by the communication device (Dc) and monitor (M), the authorization is given and transmitted to the internet terminal device that requested authorization (Di) to continue the session requested by the user (U). Any communication event (e.g. early call hang-up) detected during phone call by the communication device (Dc) that indicates an abnormal phone call will result in rejection of the authorization approval.

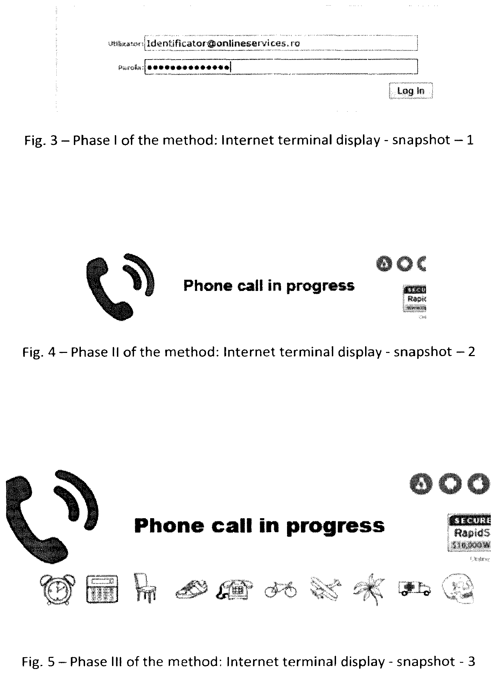

Example of application of the invention:
1. Initiation of approval is made by the user (U) that normally approaching to the internet terminal (Di) an identity card Near Field Communication (NFC) (ring, watch, and bracelet) which is programmed with a link to the service platform (Service) and the user ID. Alternatively the user may be recognized by a biometric subsystem (voice, face, iris, etc.). The bowser at the internet terminal (Di) automatically opens a new session with the services platform (Service) which starts authentication procedure. The same functionality may be achieved using username and password.
2. The services platform (Service) through the server that authorizes (Da) verifies the user ID (U) in the local database and finds the phone number of the user (U). If the user Id it is present in the local database and has a phone number associated then the server that authorize (Da) randomly generates a set of pointers which are simultaneously transmitted (3) to the communication device (Dc) and to (3a) the Internet terminal (Di):
   a) Communications device (Dc) initiates a voice call (4) the phone number of the user (U)
   b) Internet terminal (Di) generates the images based on the received set of pointers and prepares their display
   Meanwhile terminal (Di) will display: according to Figure 4.
3. When the user (U) answers the phone (5), he will hear a greeting and then instructions that must follow to be authenticated. Immediately after the phone call answer, the Internet terminal (Di) displays a set of images. If the call has failed (rejected call, congested network, no signal, etc.) the Internet terminal (Di) will show the reject of the authentication request.
4. The user (U) should select (7) images displayed in the browser on the internet terminal (Di) according with voice instructions played back by the phone (M). For example, according to Figure 5, the screen of the internet terminal (Di) is displaying ten (10) images such as computer, bicycle, chair, clock, phone, flower, etc. In the same time the phone reproduces a voice that indicates airplane, bicycle, computer and clock. The user must click (7) in order on airplane, bicycle, computer, clock as soon as he is able to click but before the automatic end of call.
5. If the user (U) selects (7) images following the instructions from the phone (M) and during the phone call, the user (U) may receive access to the services platform (Service). Any deviation in this process cancels the authentication request at the initiative of the authentication server (Da).

## Claims

1. Constructive assembly and method for granting authorized access to an Internet service platform (Service) **characterized in that** the constructive assembly is based on the fact that user access (U) it is automatically initiated by the Internet terminal (Di) using advanced technologies that recognizes the user Id and then sends the authentication request to the internet service platform (Service), platform that contains a server that authenticates (Da) connected with a communication device (Dc) by a protected private network behind a firewall, communication device (Dc) in service with a telephone service (GSM) providing a way for the server that authenticates (Da) to send random voice instructions to the user to be performed in the phone call timeframe to the internet terminal (Di), voice instructions for the user to select from random displayed images that are linked with the meaning of the voice instructions in a way **in that** the user establishes a logical loop with the server that authenticates (Da) to decide that the user is an authentic one and the access has to be granted.

2. Constructive assembly and method for granting authorized access to an Internet service platform (Service) according to claim 1, **characterized in that** the user (U) of the service platform (Service) and the telephony services may be a normal person or impaired one, or a person with reduced ability to view, low memory, or a normal person in a stressful environment that reduces person's performances. The user (U) has pre-registered since the subscription to the services platform in the platform (Services) personal data and telephone number.

3. Constructive assembly and method for granting authorized access to an Internet service platform (Service) according to claims 1 and 2, **characterized in that** the internet terminal (Di) to exploit Internet services platform (Service) shall act as the initiator of the authorization access request and provides recognition systems for user identity (U) such as biometric (face, fingertip, voice, iris) recognition, pine or gestures recognition and may have subsystems for automatically reading proximity Id cards or QR codes image recognition.

4. Constructive assembly and method for granting authorized access to an Internet service platform (Service) according to claims 1, 2 and 3, **characterized in that** the Internet services platform contains a server that authorize (Da) connected with a communication device (Dc) in a private network protected by a firewall.

5. Constructive assembly and method for granting authorized access to an Internet service platform (Service) according to claims 1, 2, 3 and 4, **characterized in that** the communication device (Dc) is connected in a private network with server that authorize (Da) and active in a telephone network (GSM). The communication device (Dc) implements voice modem technologies.

6. Constructive assembly and method for granting authorized access to an Internet service platform (Service) according to claims 1, 2, 3, 4 and 5, **characterized in that** terminal devices (Di) and (M) are open to new and upcoming technologies for identifying the user like smart phones and tablets that implements biometric technologies for that.

7. Constructive assembly and method for granting authorized access to an Internet service platform (Service) according to claims 1, 2, 3, 4, 5 and 6, **characterized in that** telephone device (M) may provide security functionalities that increases overall security of the Internet service. Functionalities for security provided by the phone may include unblocking the phone with a password, pin or gestures or by a biometric security function.

8. Constructive assembly and method for granting authorized access to an Internet service platform (Service) according to claims 1, 2, 3, 4, 5, 6 and 7, **characterized in that** it is open to increase the comfort of the user (U) in particular disabled by using terminals that allow access to internet services by voice commands or gestures and that is more secure and immune to mistakes caused by erroneous voice commands or misinterpreted gestures because the validation phone call can be rejected causing cancellation of the access request.

9. Constructive assembly and method for granting authorized access to an Internet service platform (Service) according to claims 1, 2, 3, 4, 5, 6, 7 and 8, **characterized in that** the whole constructive assembly or the internet terminal (Di), the authorizing server (Da) and the communication device (Dc) may be implemented in a single device.

10. Constructive assembly and method for granting authorized access to an Internet service platform (Service) according to claims 1, 2, 3, 4, 5, 6, 7, 8 and 9, **characterized in that** the phone call duration is minimized without the need of IVR system for interaction with the user (U), the telephone line use decreases, reducing the associated costs and the number of telephone lines required for implementation.

11. Constructive assembly and method for granting authorized access to an Internet service platform (Service) according to claims 1, 2, 3, 4, 5, 6, 7, 8, 9 and 10, **characterized in that** the internet terminal (Di) may use alternative technologies to identify a user such as wearable items like rings, watches, bracelets etc.

12. Method for granting authorized access to an Internet service platform (Service) according to claims 1-11 **characterized in that** the user (U) initiates (1) the procedure to access the Internet service (Service) by operating the internet terminal (Di) that requests authorization, so the internet terminal (Di) to determine the unique user identification may use alternative methods, in the next step the internet terminal (Di) sends (2) by Internet a message containing user ID to the server that authorizes (Da), in another step the user (U) is recognized and the server that authorizes (Da) automatically generates a random set of pointers designating sounds and images, pointers that are transmitted simultaneously (3, 3a) to the internet terminal (Di) and to the communication device (Dc), in another step the communication device (Dc) initiates a voice phone call (4) to the user's telephone (M) and informs (5) the server that authorize (Da) about call events, in another step terminal internet (Di) based on the set of pointers received (3a) prepares to display a set of images, in another step the user (U) answers the voice call and prepared images are displayed by the internet terminal (Di), in the next step the user must select (7) during the phone call from displayed images following voice instructions by telephone (M) to be authenticated.

13. Method for granting authorized access to an Internet service platform (Service) according to claims 1-12 **characterized in that** the server that authorizes (Da) is informed by the GSM network through the communication device (Dc) about status of the phone call and events of the phone call (5), and if the phone call fails the server that authorizes (Da) closes the procedure by refusing authorization and informs the internet terminal which initiated the request (Di) and the user (U) about the access denial, but if the user (U) answers the call through the terminal (M) the phone call event is received (5) of the GSM network by the communication device (Dc) respectively by the server that authorize (Da) that sends a message (6) to the internet terminal which initiated the request (Di) to display the prepared image set.

14. Method for granting authorized access to an Internet service platform (Service) according to claims 12 and 13 **characterized in that** if the user (U) does not have the correct phone number registered in the database of the services platform (Service), the call will meet someone who will not be in front of the displayed images by the internet terminal (Di) and thus voice instructions are useless, the phone call will be closed and will result in the rejection of the access approval.

15. Method for granting authorized access to an Internet service platform (Service) according to claims 12, 13 and 14 **characterized in that** the user's actions (U) (7) following voice instructions by the call in progress are assessed by the internet terminal (Di) generating a new set of pointers based on the user's selection of displayed images and sends this set of pointers to the server that authorize (Da) to compare this set with the original one and to evaluate the timeframe of user's actions if the timeframe it is ok and the sets of pointers are equal the access is granted, in all other circumstances the access request is denied.

16. Method for granting authorized access to an Internet service platform (Service) according to claims 12, 13, 14 and 15 **characterized in that** for persons with disabilities method is based on technologies that can automatically recognize and transmit the user ID (U) by the Internet terminal (Di) and interaction with the phone system is limited to just response the phone call, the automatic phone call response can be implemented based on the technical characteristics of the phone (M).

17. Method for granting authorized access to an Internet service platform (Service) according to claims 12, 13, 14, 15 and 16 **characterized in that** this method is directly exploitable by using the username (U) and password of the specific Internet service in extreme situations such as loss of the Id card or it is impossible to read the unique identifier of the user (U) because of various causes.

## Amended claims

### Amended claims in accordance with Rule 137(2) EPC.

1. Constructive assembly regarding granting the authorized access to an Internet service platform, **characterized by** the fact that a user (U) who identifies with a normal person, a person with motor impairments, with reduced vision capacity, with reduced memory or located in an environment that reduces human skills, has previously registered in the service platform (SERVICE) with his/her personal data and telephone number since the subscription time, obtains authorized access to the service platform (SERVICE) through a constructive assembly made on an architecture based on the fact that the user's access to the service platform is initiated automatically by the Internet terminal (Di) after it recognizes the user identifier, which it sends along with the request for granting access to the authorization server (Da), which is connected to a communication device (Dc), which belong to the platform (SERVICE) and which is connected to the public service of telephony (GSM) through which it connects with the user's telephone (M), whose telephone number is retrieved from the database of the platform, to dictate voice clues to user about the one-time password generated by the server (Da) through a telephone call (M), thus, if the user (U) answers the telephone call, listens to the instructions, understands and acts during the telephone call on the Internet terminal (Di) that initiated the process, so that the user's actions (U) are received, processed, evaluated and compared in real-time by the authorization server (Da) with the one-time password and if user's actions result equals server-generated one-time password, then the requested access is granted and in all other situations access is denied.

2. Constructive assembly for granting authorized access to an internet service platform, according to claim 1, **characterized in that** implements a the real-time architecture that allows the authorization server (Da) to have secure and private access through the platform network (SERVICES) to the databases and to the devices for telephone communications (Dc) which are connected to the telephone systems (GSM), so the authorization server (Da) engages the communication device (Dc) to validate the user (U) through the telephone number retrieved from the database and dictates him by voice telephone call, clues about the server generated one-time password, clues that are processed taking into account user's profile, and by the fact that in this real-time architecture, the authorization server Da is continuously informed by the telephone network (GSM) through the communication devices Dc about the status of any telephone call initiated by the service platform, so if the user (U) answers the telephone validation call through his telephone terminal (M), the event is taken over by the GSM network through the communication device (Dc) and respectively by the authorization server (Da) to continue the authorization process, or any other communication event determines processing stop and denial of access, and by continuing the process, user's actions on the Internet terminal (Di) from which user (U) requests access are sent in real-time to the authorization server (Da) to be verified that user's action result equals the one-time password, then the access is granted, in any other situation access is denied, taking care that sensible data do not cross any public communication channel and the derived data are transmitted through two disjoint communication channels so, from the transmitted data the one time password cannot be recomposed without user's specific knowledge.

3. Constructive assembly for granting authorized access to an Internet service platform, according to claims 1 and 2, **characterized in that** the Internet terminal (Di) receives the necessary instructions from the authorization server (Da) consisting in the a set of indicators (3a) which designates events and images only if the telephone contact with the user (U) is established, then collects and sends back in real-time the user's actions (U) that are determined by his understanding of the clues dictated through the ongoing telephone call, his knowledge, his experience and by the interface displayed on the screen, to the service platform in order to be evaluated and compared in by the authorization server (Da) that receives in real-time the all events generated by the user (U) on the terminal (Di) and processes, analyzes and compares user's actions result with the one-time password that was generated, this, if the user's actions result (U) equals in real-time the one-time password, then the requested access is granted, in all other situations the access is denied, taking care that verbal clues dictated through telephone call to the user together with the dynamic interface generated by the service platform and displayed by the Internet terminal (Di), to provide user (U) with necessary but insufficient elements to complete the authentication process, so an imposter to have minimal chances of gaining access based on the idea that he/she does not have the specific user's knowledge necessary to fill in the missing elements or to avoid trap gestures.

4. Constructive assembly for granting the authorized access to an Internet service platform, according to claims 1, 2 and 3, **characterized in that**, from a constructive point of view, the assembly ensures the access of users (U) with disabilities or reduced abilities, using the terminal devices (Di) that automatically detects the user's identity and / or have implemented biometric technologies such as but not limited to: fingerprint iris, fingerprint, voiceprint, technologies based on identity chip identification technologies, NFC cards, RfiD proximity cards, rings, bracelets, watch clocks hand, implants and validating the authentic user by voice phone call and monitoring the user's actions in real-time, so the user does not have to remember and type anything and the device that triggers access to platform services can be attached to the user, then the constructive assembly generates single-use random password, exclusively on the authorization server (Da) and are transformed into verbal dues dictated to authorized the user (U) by telephone calls, the clues are generated taking into account the user's profile, the user's knowledge and the user's data that make a simplified secure access and user comfort possible, then Internet terminal (Di) receive a dynamic, customized interface, from the service platform, only if the telephone connection with the user is established and then collects and sends back to the service platform all user's actions (U) that are analyzed exclusively in the authorization server Da and are compared in real-time with the server-generated one-time password, so if user's actions equals server generated one-time password, then the requested access is granted and in all other situations the access is denied.

5. Constructive assembly for granting the authorized access to an Internet service platform, according to claims 1, 2, 3 and 4, **characterized in that** the construction provides security to the user (U) with disabilities and without proper defense, in order to obtain secure access to an Internet (SERVICE) service platform, **in that** users (U) are authenticated based on information pre-registered in the platform database, and the authentication server (Da) generates verbal cues and displayed interfaces form the one-time password and user's profile, thus passwords and authentication special events are masked for malicious viewers, so the user who wishes to send to the service platform during the authentication process some special events, such as the fact that he/she is obliged to authenticate without his/her consent, can transmit these events without generating suspicions, respectively the authentication process can be seen as normal.
